# EUROPÄISCHE PATENTSCHRIFT

(11) **EP 3 554 653 B1**
(45) Veröffentlichungstag und Bekanntmachung des Hinweises auf die Patenterteilung: **09.03.2022**
(21) Anmeldenummer: 18703279.2
(22) Anmeldetag: 30.01.2018
(51) Int. Cl.: A63B 21/16, F16M 13/02, A63B 21/055

(54) **SYSTEM ZUM BEFESTIGEN VON GEGENSTÄNDEN**
SYSTEM FOR FASTENING OBJECTS
SYSTÈME DE FIXATION D'OBJETS

(30) Priorität: 01.02.2017 DE 202017100548 U; 23.11.2017 DE 202017107099 U
(43) Veröffentlichungstag der Anmeldung: 23.10.2019
(73) Patentinhaber: Wonder GmbH, 84307 Eggenfelden (DE)
(72) Erfinder: SPECKMAIER, Helmut, 84307 Eggenfelden Bayern (DE)
(74) Vertreter: Lichtnecker, Markus Christoph
(86) Internationale Anmeldenummer: PCT/EP2018/052314
(87) Internationale Veröffentlichungsnummer: WO 2018/141756

(56) Entgegenhaltungen:
- DE-A1-102014 012 263
- US-A- 4 589 557
- US-A- 5 806 823
- US-A1- 2015 013 754
- US-A1- 2016 193 495
- US-A1- 2016 324 717
- Stuart: "New Veritas Benchtop Worksurface with Dog Holes and T-Tracks", ToolGuyd , 5. Oktober 2015 (2015-10-05), XP002779860, Gefunden im Internet: URL:http://toolguyd.com/veritas-worksurfac e-with-dog-holes-t-tracks/ [gefunden am 2018-04-09]
- Wolfcraft: "wolfcraft Werk- und Maschinentisch MASTER cut 1500 (Art.-Nr. 6906000)", YouTube , 17. Dezember 2013 (2013-12-17), XP002779861, Gefunden im Internet: URL:https://www.youtube.com/watch?v=zo_9F_ pce68 [gefunden am 2018-04-09]

## Beschreibung

Die Erfindung betrifft ein System zum Befestigen von Gegenständen, umfassend eine Halterung und zumindest eine Fixiervorrichtung.

Beispielsweise in Fitnessstudios gibt es verschiedene Sportgeräte, die zusammen ein Dehnzirkel-System bilden. Die Sportgeräte werden verteilt in einem Raum aufgestellt und benötigen daher viel Platz. Die Wände bleiben hingegen ungenutzt und leer.

Es ist bekannt, verschiedene Sportgeräte an einer Wand zu fixieren. Dabei wird eine plattenförmige Halterung an der Wand befestigt. Die Halterung umfasst mehrere, voneinander beabstandete Aussparungen, in welche Fixiervorrichtungen gesteckt werden können, an denen wiederum Sportgeräte befestigt sind. Dieses System ist vergleichsweise unflexibel, da die Fixiervorrichtungen lediglich in die Aussparungen gesteckt werden können und somit keine Zwischenpositionen einnehmen können.

Eine variable Anpassung ist nicht möglich. Insbesondere kann auch die Höhe der Sportgeräte nur gestuft und dem Raster entsprechend eingestellt werden.

Es sind Kulissenführungen bekannt, wobei ein Kulissenstein in eine Nut eingreift. Wird der Kulissenstein nicht befestigt, kann sich dieser, ggf. auch ungewollt, entlang der Nut verschieben. Es ist bekannt, dass der Kulissenstein an der Nut festgeschraubt werden kann. Das Befestigen bzw. Lösen des Kulissensteins ist jedoch mit einem gewissen Zeitaufwand verbunden.

Aus dem Beitrag "New Veritas Benchtop Worksurface with Dog Holes and T-Tracks" von Stuart ist eine Werkbank mit den Merkmalen des Oberbegriffs des Anspruchs 1 bekannt.

Das Video "wolfcraft Werk- und Maschinentisch MASTER cut 1500" von Wolfcraft zeigt einen verstellbaren Werk- und Maschinentisch, wobei eine horizontale Arbeitsplatte mehrere Kulissenführungen aufweist.

US 2016/0324717 A1 offenbart ein Massagegerät, welches an einer Schiene in vertikaler Richtung verstellt werden kann.

US 2016/0193495 A1 betrifft ein Physiotherapiegerät, welches beispielsweise an einer Türe befestigt werden kann. Es kann eine Verstellung mittels einer linearen Nut sowie einer bogenförmigen Nut erfolgen.

In DE 10 2014 012 263 A1 wird ein rahmenförmiges Trainingsgerät mit Anschlagmitteln mit Einhand-Schnellverstellung beschrieben. Eine horizontale sowie vertikale Verstellung sind möglich.

US 2015/0013754 A1 betrifft ein Befestigungssystem für Solarmodule mit linearen Nuten.

US 5,806,823 A offenbart eine Halterung für ein Schild mit einer Nut.

US 4,589,557 A offenbart ein System gemäß dem Oberbegriff des Anspruchs 1.

Es ist eine Aufgabe der Erfindung, ein System zum Befestigen von Gegenständen der eingangs genannten Art dahingehend zu verbessern, dass eine variable Fixierung von Gegenständen ermöglicht wird.

Die Lösung dieser Aufgabe erfolgt durch das System mit den Merkmalen des Anspruchs 1.

Erfindungsgemäß ist die Fixiervorrichtung über eine Kulissenführung mit der Halterung verbunden oder verbindbar und zur stufenlosen, lösbaren Befestigung an der Halterung ausgebildet.

Die Kulissenführung kann eine Nut und einen Kulissenstein aufweisen. Beispielsweise kann der Kulissenstein mit der Nut in Eingriff gebracht werden und relativ zur Nut verstellt werden. Die Halterung weist die Nut und die Fixiervorrichtung den Kulissenstein auf. Alternativ kann auch die Fixiervorrichtung eine Nut aufweisen, welche in Eingriff mit einem Kulissenstein der Halterung gebracht wird. Die Nut bzw. der Kulissenstein der Halterung kann dabei als eine Art Schiene ausgebildet sein.

Die Nut bzw. der Kulissenstein der Halterung und/oder der Kulissenstein bzw. die Nut der Fixiervorrichtung kann eine Verzahnung und/oder ein reibungserhöhtes Material aufweisen. Auf diese Weise kann verhindert werden, dass die Fixiervorrichtung ungewollt verrutscht, beispielsweise bei einem vertikalen Verlauf der Nut bzw. des Kulissensteins.

Die Kulissenführung ist derart ausgebildet, dass die Fixiervorrichtung relativ zur Halterung in zumindest einer vertikalen Richtung und wenigstens einer horizontalen Richtung einer Ebene verstellbar ist.

Die horizontale Richtung ist insbesondere rechtwinklig zur vertikalen Richtung orientiert. Vorzugsweise ist eine Verstellung in x- und y-Richtung möglich.

Die Kulissenführung umfasst mehrere vertikale und horizontale Führungen. Die Richtungen, in die die Fixiervorrichtung verstellt werden kann, werden durch die Führungen festgelegt. Mehrere vertikale und horizontale Führungen sind rasterförmig angeordnet und weisen Kreuzungspunkte auf.

Die Halterung umfasst Nuten, die rasterartig angeordnet sind. Die Nuten können insbesondere als quadratisches oder rechteckiges Raster ausgebildet sein. Ferner ist auch ein rautenförmiges Raster möglich.

Die Seitenlänge eines Raster-Segments kann insbesondere zwischen 10 cm und 50 cm, insbesondere 15 cm, 20 cm oder 30 cm, umfassen. Je kleiner die Seitenlänge, desto variabler ist das System.

Die Nuten benachbarter Raster-Segmente können insbesondere miteinander verbunden sein bzw. als Einheit ausgebildet sein. Es ergibt sich somit ein Schienensystem aus Nuten.

Die Nuten der Halterung legen die Bewegungsrichtung der Fixiervorrichtung fest. Einführ-/Entnahmeabschnitte können vorzugsweise an Kreuzungspunkten der Nuten vorgesehen sein. Insbesondere kann jeder Kreuzungspunkt einen Einführ-/Entnahmeabschnitt aufweisen.

Die Halterung ist plattenförmig ausgebildet. Vorzugsweise kann eine Nut in die Platte eingebracht, z.B. eingefräst sein..

Bei der Platte kann es sich insbesondere um eine Multiplexplatte, Kunststoffplatte, Siebdruckplatte und/oder Holzplatte handeln. Die Nuten können nachträglich angeformt sein, beispielsweise aus einem anderen Material, z.B. Kunststoff oder Metall. Auch können die Nuten mit einem anderen Material versehen werden. So kann beispielsweise eine Metallschiene in eine Nut eingebracht werden bzw. die Metallschiene kann selbst die Nut bilden.

Die Halterung kann als Wandhalterung, Säulenhalterung, Deckenhalterung oder Bodenhalterung ausgebildet sein. So kann die Halterung auf einfache Weise an bestehenden Strukturen befestigt werden. Sowohl größere Flächen wie Wände, Decken und Böden als auch kleinere Flächen wie Säulen können mit einer Halterung versehen werden. Auch vorhandene Schrägen bzw. neue Schrägen können je nach Anwendungsgebiet vorgesehen sein. Eine Säule kann dabei vollständig mit einer Halterung versehen werden. Alternativ kann die Halterung auch lediglich an einer, zwei oder drei Seiten der Säule befestigt werden.

Die Halterung kann auch ohne bereits vorhandene Struktur eingesetzt werden. Beispielsweise kann die Halterung als freistehende Box, Wand oder Tower ausgebildet sein. Eine freistehende Wand kann auf einer oder auf beiden Seiten eine Kulissenführung aufweisen. Ein Tower kann insbesondere zwei, drei oder vier Seiten aufweisen, welche je nach Bedarf Kulissenführungen aufweisen können.

Die Verstellbarkeit ist insbesondere lediglich in einer gelösten Verstellposition der Fixiervorrichtung gegeben. Ist die Fixiervorrichtung in der Halterung fixiert, ist keine Verstellung möglich.

In der Verstellposition kann die Fixiervorrichtung somit in der Kulissenführung relativ zur Halterung bewegt werden. Bei den Dimensionen kann es sich insbesondere um eine x- und y-Richtung handeln. Auf diese Weise ist beispielsweise auch eine Höhenverstellbarkeit gegeben. Ein Gegenstand kann somit, z.B. in Abhängigkeit von der Größe eines Benutzers, stufenlos auf eine bestimmte Höhe eingestellt werden.

Alternativ oder zusätzlich kann die zweidimensionale Bewegung auch andere Richtungen in einer Ebene umfassen, z.B. eine schräge Bewegung.

Beim Befestigen der Fixiervorrichtung wird diese vorzugweise gleichzeitig in zwei Dimensionen fixiert, d.h. eine Bewegung ist in keine Richtung mehr möglich. Entsprechend wird vorzugsweise bei einem Lösen der Fixierung eine Verstellbarkeit in zwei Dimensionen erreicht. Derselbe Fixiermechanismus ermöglicht bzw. unterbindet somit eine Verstellbarkeit in sämtlichen Richtungen der Ebene.

Vorzugsweise ist die Fixiervorrichtung werkzeuglos an der Halterung befestigbar. Auf diese Weise kann die Position der Fixiervorrichtung an der Halterung schnell und einfach verändert werden.

Die Halterung ist insbesondere flächig. Beispielsweise kann die Halterung plattenartig ausgebildet sein. So kann die Halterung beispielsweise eine Ebene definieren, in welcher die Fixiervorrichtung verstellt und stufenlos fixiert werden kann.

Gegenstände können auf diese Weise variabel fixiert werden. Auch können bisher ungenutzte Wände eines Fitnessstudios genutzt werden.

Weiterbildungen der Erfindung sind auch den abhängigen Ansprüchen, der Beschreibung sowie den beigefügten Zeichnungen zu entnehmen.

Nach einer Ausführungsform ist die Kulissenführung derart ausgebildet, dass die Fixiervorrichtung zumindest in einer schrägen Richtung verstellbar ist. Die Fixiervorrichtung kann beispielsweise schräg, insbesondere diagonal, verstellt werden. So kann die Kulissenführung z.B. eine bzw. mehrere schräge, insbesondere diagonale, Führung/en umfassen. Auch können die Führungen rautenförmig angeordnet sein. Beispielsweise können mehrere schräge Führungen rasterförmig angeordnet sein und Kreuzungspunkte aufweisen.

Gemäß einer weiteren Ausführungsform ist die Kulissenführung derart ausgebildet, dass die Fixiervorrichtung zumindest in einer gekrümmten Bahn verstellbar ist. Die Fixiervorrichtung kann beispielsweise kreisförmig und/oder bogenförmig, insbesondere kreissegmentförmig, verstellt werden. So kann die Kulissenführung z.B. eine bzw. mehrere kreisförmige und/oder bogenförmige, insbesondere kreissegmentförmige, Führung/en umfassen.

Insbesondere können mehrere bogenförmige Führungen übereinander angeordnet sein. Dabei kann z.B. eine Grad-Skala vorgesehen sein. Ein Benutzer kann entsprechend seiner Größe eine bestimmte bogenförmige Führung auswählen und seine Beweglichkeit bzw. die Verbesserung seiner Beweglichkeit messen. Der Benutzer steht hierbei zentral unterhalb des Bogens und biegt den Oberkörper, vorzugsweise mit ausgestreckten Armen, seitlich. Die Fixiervorrichtung kann dabei als Markierung für die maximale seitliche Auslenkung dienen, beispielsweise als zu erreichendes Ziel oder als Markierung für die erreichte Auslenkung.

Vorzugsweise können auch horizontale, vertikale, schräge und gekrümmte Kulissenführungen miteinander kombiniert werden. Die Befestigungs- und Anwendungsmöglichkeiten werden dadurch weiter erhöht.

Nach einer weiteren Ausführungsform weist die Kulissenführung zumindest einen Einführ-/Entnahmeabschnitt auf, in dem die Fixiervorrichtung einführbar und/oder entnehmbar ist. Vorzugsweise kann die Öffnung der Nut am Einführ-/Entnahmeabschnitt größer sein als der Kulissenstein.

Insbesondere können mehrere Einführ-/Entnahmeabschnitte vorgesehen sein, sodass die Fixiervorrichtung an verschiedenen Stellen eingeführt bzw. entnommen werden kann. Ein Einführen bzw. eine Entnahme ist insbesondere jedoch nicht überall möglich, d.h. abseits der Einführ-/Entnahmeabschnitte kann die Fixiervorrichtung nur verschoben werden, da dort die Öffnung der Nut kleiner ist als der Kulissenstein. Ein Einführen bzw. eine Entnahme ist nur an bestimmten Abschnitten möglich. Die Einführ-/Entnahmeabschnitte können grundsätzlich an beliebigen Stellen vorgesehen sein.

Nach einer weiteren Ausführungsform sind die Nuten T-förmig oder schwalbenschwanzförmig ausgebildet. Diese Formen ermöglichen einen guten Halt.

Die Nuten der Halterung können gegenüber der Oberfläche etwas zurückgesetzt sein, beispielsweise zwischen 0,1 cm und 1 cm, vorzugsweise 0,2 cm. Dadurch wird die Verspannung im befestigten Zustand verbessert. Auch hält die Fixiervorrichtung, falls sich das Material der Halterung, z.B. Holz, verformt.

Nach einer weiteren Ausführungsform weist die Nut mindestens eine Vertiefung für ein Vorsprungselement auf. Insbesondere können mehrere Vertiefungen, z.B. in gleichen Abständen, vorgesehen sein. Das Vorsprungselement kann in die Vertiefung einrasten. Die Fixiervorrichtung wird auf diese Weise zusätzlich fixiert.

Nach einer weiteren Ausführungsform ist die Halterung modulartig ausgebildet und umfasst mehrere, nebeneinander anordbare Platten. Je nach Bedarf können somit mehrere Haltemodule miteinander kombiniert und nebeneinander, z.B. seitlich oder übereinander, angeordnet werden. Die Länge, Höhe und/oder Breite der Halterung kann auf diese Weise auch nachträglich erweitert werden.

Gemäß einer weiteren Ausführungsform umfasst die Halterung Befestigungsmittel zur Befestigung an einer Wand, einer Decke und/oder einem Boden. Die Halterung ist somit vorzugsweise nicht freistehend. Bisher ungenutzte Strukturen können auf diese Weise genutzt werden, wobei nur wenig zusätzlicher Platz benötigt wird.

Vorzugsweise kann zunächst eine Leiste an der Wand, der Decke und/oder dem Boden montiert, z.B. gedübelt, werden. Anschließend kann die Halterung in die Leiste einhängt werden. Die Halterung kann als Befestigungsmittel hierbei eine Hinterschneidung aufweisen, welche mit der Leiste in Eingriff gebracht wird. Auf diese Weise liegt die Halterung bündig an, wodurch Platz gespart wird. Die Halterung kann mit der Leiste beispielsweise zusätzlich verschraubt sein.

Alternativ kann die Halterung jedoch auch unmittelbar an der Wand, der Decke und/oder dem Boden montiert, z.B. festgeschraubt, werden.

Nach einer weiteren Ausführungsform umfasst die Fixiervorrichtung einen länglichen oder runden Kulissenstein.

Ein länglicher Kulissenstein kann insbesondere eine Länge zwischen 5 cm und 15 cm, vorzugsweise 10 cm, aufweisen. Die maximale Breite kann beispielsweise zwischen 1 cm und 2 cm, vorzugsweise 1,5 cm, betragen.

Die Breite eines länglichen Kulissensteins bzw. der Durchmesser eines runden Kulissensteins ist vorzugsweise kleiner als der maximale Durchmesser der Nut und größer als der minimale Durchmesser der Nut. Insbesondere kann der runde Kulissenstein z.B. an einer als Metallschiene ausgebildeten Nut festgeklemmt werden.

Die Nut und/oder der Kulissenstein kann eine Verzahnung und/oder ein reibungserhöhtes Material aufweisen. Die Nut bzw. der Kulissenstein kann hierbei eine Rändelung, Quer-, Längs- und/oder Diagonal-Rillung aufweisen. Ein ungewolltes Verrutschen wird dadurch unterbunden.

Gemäß einer weiteren Ausführungsform ist der Kulissenstein T-förmig oder schwalbenschwanzförmig ausgebildet. Insbesondere korrespondiert der Kulissenstein mit der Form der Nut. Eine sichere Führung sowie ein sicherer Halt werden auf diese Weise gewährleistet.

Nach einer weiteren Ausführungsform umfasst die Fixiervorrichtung eine Schraub-, Rast- und/oder Klemmvorrichtung zur Fixierung an der Halterung. Die Fixiervorrichtung ist vorzugsweise werkzeuglos an der Halterung, insbesondere einer Nut der Halterung, befestigbar.

Insbesondere kann die Schraubvorrichtung eine Sterngriffschraube umfassen, mit der auf einfache Weise eine Fixierung erfolgt. Auch ein Klicksystem ist denkbar. So kann die Fixiervorrichtung beispielsweise bei einer Verdrehung um 90° fixiert werden.

Ferner kann die Fixiervorrichtung an der Unterseite ein Federelement, insbesondere ein Federblech, aufweisen. So kann die Fixiervorrichtung stets in der Halterung festgeklemmt sein und halten, ohne festgeschraubt zu sein. Für einen sicheren Halt kann jedoch zusätzlich z.B. eine Verschraubung erfolgen.

Durch das vorgespannte Federelement verrutscht die Fixiervorrichtung beispielsweise nicht ungewollt aus der Vertikalen. Um die Fixiervorrichtung zu verstellen, wird eine Kraft entgegen der Vorspannkraft des Federelements ausgeübt.

Nach einer weiteren Ausführungsform umfasst die Fixiervorrichtung einen Kulissenstein, welcher zumindest eine Auskragung aufweist.

Als Auskragung ist insbesondere ein, vorzugsweise symmetrischer, Vorsprung mit einer Hinterschneidung zu verstehen. Die Auskragung kann mit einer Nut in Eingriff gebracht werden, wodurch der Kulissenstein in der Nut zwangsgeführt ist.

Die Fixiervorrichtung umfasst eine Vorsprungsvorrichtung, wobei die Vorsprungsvorrichtung ein Vorsprungselement aufweist, welches zwischen einer Fixierposition und einer Verschiebeposition verstellbar ist, wobei zumindest ein Abschnitt des Vorsprungselements in der Fixierposition weiter über die Stirnseite des Kulissensteins hervorragt als in der Verschiebeposition.

Insbesondere kann die Stirnseite des Kulissensteins rund, oval oder eckig, vorzugsweise rechteckig, z.B. quadratisch, oder vieleckig sein. Beispielsweise kann sich ein länglicher, insbesondere ovaler, Kulissenstein durch ein Verdrehen in einer Nut einspreizen.

Der Kulissenstein, insbesondere die Stirnseite des Kulissensteins, kann eine Verzahnung und/oder ein reibungserhöhtes Material, insbesondere ein Gummimaterial, aufweisen.

In der Fixierposition wird der Kulissenstein durch das Vorsprungselement gewissermaßen nach vorne, über die Stirnseite hinaus, verlängert. Vorzugsweise kann das Vorsprungselement zentral oder dezentral angeordnet sein. Auch können mehrere Vorsprungselemente vorgesehen sein.

Insbesondere kann der Kulissenstein auch seitliche Vorsprungselemente aufweisen, sodass nicht nur an der Stirnseite ein Vorsprungselement vorgesehen ist. So kann z.B. bei einem viereckigen Kulissenstein an jeder Seite ein seitliches Vorsprungselement angeordnet sein.

In der Fixierposition ist das Vorsprungselement ausgefahren. Der Kulissenstein drückt sich gewissermaßen von der Hinterseite der Nutenführung ab, sodass sich die Fixiervorrichtung an der Nutenführung verkeilt. Die Fixiervorrichtung hemmt sich selbst.

Um die Fixiervorrichtung zusätzlich zu sichern, kann die Fixiervorrichtung eine
Schraub-, Rast- und/oder Klemmvorrichtung aufweisen. Dies ist jedoch nicht notwendig. So ist die Fixiervorrichtung bereits durch die Vorsprungsvorrichtung fixiert.

In der Verschiebeposition kann die Fixiervorrichtung hingegen in der Nut verschoben werden. Das Vorsprungselement kann dabei z.B. durch Krafteinwirkung eingedrückt werden. Daraufhin ist ein Spiel vorhanden, um den Kulissenstein frei in der Nut bewegen zu können.

Für die Betätigung der Vorsprungvorrichtung ist insbesondere kein Werkzeug notwendig. Eine schnelle Fixierung wird dadurch ermöglicht.

Im Bereich der Stirnseite kann der Kulissenstein beispielsweise einen starren Vorsprung bzw. eine Struktur aufweisen. Bei einer entsprechend geformten Nut kann auf diese Weise sichergestellt werden, dass nur bestimmte Kulissensteine mit der Nut bzw. Abschnitten der Nut in Eingriff gebracht werden können. So kann ein Kulissenstein mit einer bestimmten Struktur beispielsweise nur in eine entsprechend geformte Nut eindringen, um auf diese Weise Fehlplatzierungen, Verwechslungen und/oder ein falsches Montieren zu vermeiden.

Gemäß einer Ausführungsform weist die Vorsprungsvorrichtung eine Vorspannvorrichtung auf, welche das Vorsprungselement in die Fixierposition vorspannt. Ohne Krafteinwirkung ist das Vorsprungselement somit ausgefahren und die Fixiervorrichtung gesichert.

Nach einer weiteren Ausführungsform weist die Vorspannvorrichtung ein elastisches Element auf. Dabei kann es sich insbesondere um eine Feder oder ein Elastomer handeln. Beispielsweise kann ein Silikonmaterial oder eine gelartige Masse vorgesehen sein. Das Elastomer kann z.B. als Scharnier oder Dämpfer ausgebildet sein.

Gemäß einer weiteren Ausführungsform ist die Vorspannvorrichtung zumindest abschnittsweise im Inneren des Kulissensteins angeordnet. So ragt die Vorspannvorrichtung in der Verschiebeposition insbesondere nicht über die Stirnseite des Kulissensteins vor, sodass der Kulissenstein problemlos verschoben werden kann.

Nach einer weiteren Ausführungsform ist das Vorsprungselement in der Verschiebeposition zumindest abschnittsweise im Kulissenstein versenkt. Das Vorsprungselement steht vorzugsweise nicht über die Stirnseite des Kulissensteins vor, sodass der Kulissenstein problemlos verschoben werden kann.

Gemäß einer weiteren Ausführungsform ist das Vorsprungselement als Kugel, Kegel, Würfel oder Stift ausgebildet. So kann in der Fixierposition beispielsweise etwa die Hälfte einer Kugel über die Stirnseite des Kulissensteins vorstehen.

Nach einer weiteren Ausführungsform weist die Fixiervorrichtung einen Anschlagskörper mit einer Anschlagsfläche auf, wobei der Kulissenstein über die Anschlagsfläche vorsteht.

Der Anschlagskörper und der Kulissenstein können vorzugsweise einstückig geformt sein.

Der Kulissenstein kann insbesondere rechtwinklig oder geneigt zur Anschlagsfläche, insbesondere nach vorne, vorstehen.

Die Anschlagsfläche kann, insbesondere in der Fixierposition, an der Nutenführung, vorzugsweise einem äußeren Rand der Nutenführung, anschlagen. Die Nutenführung wird zwischen der Anschlagsfläche und der Auskragung aufgenommen. In der Fixierposition verklemmt sich die Fixiervorrichtung gewissermaßen am Rand der Nutenführung.

Vorzugsweise ist die Anschlagsfläche größer als der Kulissenstein. Die Selbsthemmung wird dadurch verbessert. Grundsätzlich kann die Anschlagsfläche jedoch auch kleiner als der Kulissenstein sein.

Die Anschlagsfläche kann z.B. rund, oval oder eckig, vorzugsweise rechteckig, z.B. quadratisch, oder vieleckig sein. Eine runde Anschlagsfläche setzt insbesondere schnell an der Nutenführung an. Auch spielt die Orientierung keine Rolle.

Gemäß einer weiteren Ausführungsform weist der Anschlagskörper seitliche Vorsprünge auf, z.B. für die Arretierung. Diese können insbesondere erhaben sein. Auch können die Vorsprünge insbesondere über die Anschlagsfläche vorstehen. So ergibt sich beim Fixieren frühzeitig ein Kontakt mit der Nutenführung.

Nach einer weiteren Ausführungsform weist der Anschlagskörper, insbesondere an seiner der Anschlagsfläche abgewandten Seite, eine Haltevorrichtung für einen Gegenstand auf. Ein Gegenstand kann somit über die Haltevorrichtung an der Fixiervorrichtung und über die Fixiervorrichtung wiederum mit einer Nut verbunden werden.

Bei dem Gegenstand kann es sich beispielsweise um ein Regalelement, z.B. einen Regalboden oder eine Regalwand, bzw. einen Raumteiler handeln. Die Fixiervorrichtung eignet sich somit z.B. für den Ladenbau.

Daneben können z.B. auch Sportgeräte oder Werkzeuge an der Fixiervorrichtung befestigt sein.

Insbesondere kann der Gegenstand auch selbst die Fixiervorrichtung aufweisen und beispielsweise eine Einheit bilden.

Gemäß einer weiteren Ausführungsform weist die Haltevorrichtung einen Haltestift, insbesondere mit einem Außengewinde, auf. An dem Haltestift kann beispielsweise ein Gegenstand befestigt, z.B. aufgeschraubt, werden.

Der Haltestift kann beispielsweise in einer Aussparung des Anschlagskörpers befestigt, z.B. eingeschraubt, werden. Insbesondere kann der Haltestift an einem Endbereich eine Werkzeugaufnahme, vorzugsweise einen Innenmehrkant, z.B. Innensechskant, oder ein Innenvielrund, z.B. Innensechsrund, aufweisen. Über die Werkzeugaufnahme kann der Haltestift insbesondere am Anschlagskörper befestigt werden.

Nach einer weiteren Ausführungsform weist die Haltevorrichtung eine Hinterschneidung auf. So kann ein Gegenstand z.B. auf die Haltevorrichtung aufgebracht und verdreht werden. Die Hinterschneidung verhindert dabei, vergleichbar einem Bajonett-Verschluss, ein ungewolltes Lösen.

Grundsätzlich kann die Haltevorrichtung eine beliebige Einhänge-, Klett-, Klebe-, Klammer-, Klemm-, Steck-, Rast-, Magnet-, Zapfen- und/oder Schraubvorrichtung aufweisen. Die Befestigung kann insbesondere werkzeuglos erfolgen.

Ein Gegenstand kann dadurch auf einfache Weise, insbesondere lösbar, an der Haltevorrichtung befestigt werden. Ein schneller Austausch wird dadurch gewährleistet.

Gemäß einer weiteren Ausführungsform weist die Haltevorrichtung zumindest einen Halteschlitz auf. Der Halteschlitz kann sich insbesondere quer über die der Anschlagsfläche abgewandte Stirnseite erstrecken.

Insbesondere sind mehrere, insbesondere zwei, sich z.B. kreuzende Halteschlitze möglich.

Der Halteschlitz kann sich auch zwischen der oberen Stirnseite und der Anschlagsfläche erstrecken, z.B. als seitlicher Schlitz. Auch können dort mehrere Halteschlitze vorgesehen sein.

Die Form des Halteschlitzes ist grundsätzlich beliebig. So kann der Halteschlitz z.B. gerade Wände aufweisen oder U- oder V-förmig ausgebildet sein. Alternativ kann dieser auch als Nut, z.B. Schwalbenschwanz- oder kegelförmig oder als T-Nut, ausgebildet sein.

Auch kann der Halteschlitz eine Hinterschneidung aufweisen.

Nach einer weiteren Ausführungsform weist die Haltevorrichtung ein Sicherungselement, insbesondere eine Schraube, auf. Ein in z.B. einen Halteschlitz eingebrachter Gegenstand kann somit fixiert und/oder arretiert werden. Bei der Schraube kann es sich insbesondere um eine Madenschraube handeln.

Gemäß einer weiteren Ausführungsform weist der Kulissenstein und/oder ein Anschlagskörper eine, insbesondere zentrale, Aussparung für die Vorsprungsvorrichtung auf. Die Aussparung kann insbesondere zylinderförmig ausgebildet sein. In die Aussparung können beispielsweise ein Vorsprungselement, z.B. eine Kugel, sowie eine Vorspannvorrichtung, z.B. eine Spiralfeder, eingebracht werden. Die Aussparung kann anschließend z.B. über einen Haltestift verschlossen werden.

Nach einer weiteren Ausführungsform verjüngt sich die Aussparung zumindest im Bereich der Stirnseite des Kulissensteins. Dadurch wird insbesondere verhindert, dass das Vorsprungselement im Bereich der Stirnseite ungewollt aus der Aussparung austritt.

Gemäß einer weiteren Ausführungsform ist der Durchmesser der Aussparung im Bereich der Stirnseite des Kulissensteins kleiner als der Durchmesser des Vorsprungselements. Dadurch wird insbesondere verhindert, dass das Vorsprungselement im Bereich der Stirnseite ungewollt aus der Aussparung austritt.

Nach einer weiteren Ausführungsform weist die Aussparung ein Innengewinde auf. So kann z.B. ein Haltestift in der Aussparung befestigt werden. Der Haltestift kann somit eine Doppelfunktion erfüllen. Einerseits kann er die Vorspannvorrichtung vorspannen bzw. die Stärke der Vorspannung justieren. Andererseits kann er als Halterung für einen Gegenstand dienen.

Gemäß einer weiteren Ausführungsform weist der Kulissenstein einen T- oder V-förmigen Querschnitt auf. Auch kann der Kulissenstein Schwalbenschwanz- oder kegelförmig geformt sein.

Ein kegelförmiger Kulissenstein ist z.B. unabhängig von der Orientierung der Nut. So kann dieser in x- oder y-Richtung sowie z.B. diagonal bewegt werden. Die Gradzahl spielt dabei keine Rolle.

Der Kulissenstein verbreitert sich, insbesondere ausgehend von der Anschlagsfläche. Dadurch bildet sich die Auskragung, über die der Kulissenstein in der Nut gehalten wird.

Nach einer weiteren Ausführungsform weist der Kulissenstein mindestens drei, vier, fünf, sechs, sieben oder acht sich, insbesondere trichterförmig, von einer Anschlagsfläche eines Anschlagskörpers erstreckende Seitenflächen auf. Bevorzugt sind vier oder acht Seitenflächen vorgesehen. Bei vier Seitenflächen kann der Kulissenstein z.B. in zwei Dimensionen, insbesondere horizontal und vertikal, verschoben werden. Bei acht Seitenflächen wäre insbesondere zusätzlich eine Verschiebung in 45° möglich.

Gemäß einer weiteren Ausführungsform erstrecken sich die Seitenflächen und/oder die Eckgeraden der Seitenflächen unter demselben Winkel von einer Anschlagsfläche eines Anschlagskörpers. Der Winkel kann z.B. 90° betragen. Die Seitenflächen erstrecken sich dabei rechtwinklig von der Anschlagsfläche. Alternativ können die Seitenflächen auch schräg angeordnet sein, beispielsweise unter einem Winkel kleiner als 90°. So kann der Winkel z.B. zwischen 60° und 80°, vorzugsweise bei 75° liegen.

Nach einer weiteren Ausführungsform erstrecken sich zumindest zwei Seitenflächen und/oder zumindest zwei Eckgeraden der Seitenflächen unter unterschiedlichen Winkeln von einer Anschlagsfläche eines Anschlagskörpers.

Bei vier Seitenflächen kann der Kulissenstein somit beispielsweise beidseitig oder einseitig gerade sein und insbesondere einen Schuh ausbilden. Statische Lasten können auf diese Weise gut aufgenommen werden.

Die Erfindung betrifft auch ein System zum Befestigen von Gegenständen, umfassend eine, insbesondere flächige, Halterung.

Gemäß einer weiteren Ausführungsform umfasst die Fixiervorrichtung eine Haltevorrichtung für einen Gegenstand, insbesondere ein Sportgerät und/oder Medizingerät. Über die Haltevorrichtung kann ein Gegenstand an der Fixiervorrichtung und dadurch an der Halterung befestigt werden.

Bei dem Gegenstand kann es sich beispielsweise um eine Sprossenwand handeln. Diese kann parallel oder rechtwinklig zur Wand orientiert sein. Bei einer rechtwinkligen Orientierung kann an der von der Wand entfernten Seite insbesondere eine Stütze gegen Torsionskräfte vorgesehen sein. Die Stütze kann beispielsweise im Boden verankert sein.

Auch kann es sich bei dem Gegenstand um eine Leiter, z.B. Strickleiter, ein Netz, eine Rutsche, eine Rolle, z.B. Faszienrolle, oder ein Seil, z.B. Springseil, SDX ^{®} Rope, aeroSling ^{®} oder einen Expander, handeln.

Der Gegenstand kann auch als, insbesondere höhenverstellbarer, Basketballkorb, als Tor, als Stange, z.B. Klimmzugstange oder Dipstange, als Boxsack, als Punchingball oder als Element eines Dehnzirkelsystems ausgebildet sein.

Ferner kann es sich bei dem Gegenstand um eine Hantel handeln. Eine Langhantel kann z.B. wandseitig gelenkig mit der Fixiervorrichtung verbunden sein, während die von der Wand entfernte Seite mit einem Gewicht versehenen ist.

Bei dem Gegenstand kann es sich beispielsweise auch um eine Seilrolle, einen Haken, ein Expressset oder um einen Klettergriff handeln.

Ferner kann der Gegenstand als Aufbewahrungsvorrichtung, insbesondere für ein Handtuch, ein Seil, ein Gewicht, z.B. eine Hantel oder eine Hantelstange, einen Ball, z.B. Bosu ^{®}, ausgebildet sein.

Neben Sportgeräten sind auch medizinische Geräte denkbar. So kann es sich bei dem Gegenstand z.B. um eine Vorrichtung zum Messen der Körpergröße handeln. Auch kann es sich um eine Vorrichtung zur Messung und/oder Verbesserung der Beweglichkeit handeln. Eine derartige Vorrichtung kann als separates Bauteil befestigt werden. Alternativ kann auch eine Fixiervorrichtung als Markierung in einer gebogenen Kulissenführung verstellt werden. Die Vorrichtung zur Messung und/oder Verbesserung der Beweglichkeit kann dabei eine Grad-Skala umfassen, um die Auslenkung des Oberkörpers bestimmen zu können.

Der Gegenstand ist nicht auf Sportgeräte oder Medizingeräte beschränkt. So kann es sich bei dem Gegenstand beispielsweise auch um eine Beleuchtung, ein Schranksegment, ein Regal, ein Bild, einen Fernseher, einen Kleiderhaken, eine Garderobe oder eine Werkzeugwand handeln. Auch Küchen-, Bad- und/oder Toilettenutensilien können fixiert werden. Beispielsweise kann ein Bad bzw. eine Toilette für Behinderte mit einem erfindungsgemäßen System ausgestattet werden. Griffe oder dergleichen können hierbei auf einfache Weise montiert und/oder an die jeweiligen Erfordernisse angepasst werden.

Je nach Größe und/oder Gewicht des Gegenstands können auch mehrere Fixiervorrichtungen gleichzeitig an der Halterung fixiert werden. Die Last des Gegenstands kann auf diese Weise auf mehrere Fixiervorrichtungen verteilt werden.

Nach einer weiteren Ausführungsform ist eine Markierung zur Anzeige eines Fixierpunktes für die Fixiervorrichtung vorgesehen. Durch die Markierung kann, abhängig vom zu befestigenden Gegenstand bzw. vom Benutzer, eine optimale Höhe bzw. Position für die Fixiervorrichtung angezeigt werden. Bei der Markierung kann es sich auch z.B. um eine Grad-Skala für eine Vorrichtung zur Messung und/oder Verbesserung der Beweglichkeit handeln. Die Markierungen können alphanumerische Zeichen, Symbole und/oder Farben umfassen.

Beispielsweise können durch Markierungen verschiedene Fixierpunkte für Klettergriffe vorgegeben werden. Unterschiedliche Kletterrouten, insbesondere mit verschiedenen Schwierigkeitsgraden, können auf diese Weise einfach gebaut werden.

Die plattenförmige Halterung kann mit einem reibungserhöhten Material versehen sein, z.B. um einen besseren Gripp beim Klettern zu erhalten.

Auch kann die plattenförmige Halterung bedruckt, lackiert und/oder gestrichen sein. So kann beispielsweise die Optik verbessert werden. Ferner kann die Halterung als Werbefläche dienen.

Das Befestigungssystem kann insbesondere in einem Container vorgesehen sein. So können z.B. die Wände, die Decke und/oder der Boden eines Containers mit einem erfindungsgemäßen Befestigungssystem ausgestaltet sein.

Die Erfindung betrifft somit auch einen Container mit einem, vorzugsweise erfindungsgemäßen, System zum Befestigen von Gegenständen, umfassend eine, insbesondere flächige, Halterung und zumindest eine Fixiervorrichtung. Die Fixiervorrichtung ist über eine Kulissenführung mit der Halterung verbunden oder verbindbar und zur stufenlosen, lösbaren Befestigung an der Halterung ausgebildet. Die Kulissenführung ist derart ausgebildet, dass die Fixiervorrichtung relativ zur Halterung in zumindest zwei Dimensionen verstellbar ist.

Bei dem Container kann es sich z.B. um einen ISO-Container oder Wechselbehälter handeln. Ein ISO-Container ist ein genormter Seefracht-Container. Ein Wechselbehälter wird auch Wechselaufbau genannt und ist zur Beförderung auf einem Lastkraftwagen geeignet.

Beispielsweise können derartige Container als temporäre Fitnesscenter aufgestellt werden, z.B. für Feste. Auch können derartige Container z.B. als kompakte Wohnungen dienen.

Für die Kombination eines Containers mit einem erfindungsgemäßen Befestigungssystem wird auch unabhängig von der Ausgestaltung der Fixiervorrichtung Schutz beansprucht.

Die Erfindung betrifft auch einen fliegenden Bau mit einem, vorzugsweise erfindungsgemäßen, System zum Befestigen von Gegenständen, umfassend eine, insbesondere flächige, Halterung und zumindest eine Fixiervorrichtung. Die Fixiervorrichtung ist über eine Kulissenführung mit der Halterung verbunden oder verbindbar und zur stufenlosen, lösbaren Befestigung an der Halterung ausgebildet. Die Kulissenführung ist derart ausgebildet, dass die Fixiervorrichtung relativ zur Halterung in zumindest zwei Dimensionen verstellbar ist.

Das Befestigungssystem kann somit beispielsweise in einem fliegenden Bau vorgesehen sein. So können z.B. die Wände, die Decke und/oder der Boden eines fliegenden Baus mit einem erfindungsgemäßen Befestigungssystem ausgestaltet sein.

Bei einem fliegenden Bau handelt es sich insbesondere um eine bauliche Anlage, die dazu ausgebildet ist, wiederholt aufgestellt und/oder abgebaut zu werden.

Beispielsweise kann es sich hierbei um Fahrgeschäfte, (Schau)Buden, Tribünen, Bühnen, Belustigungsgeschäfte, Zelte und/oder temporär ortsfeste Wagen handeln.

Für die Kombination eines fliegenden Baus mit einem erfindungsgemäßen Befestigungssystem wird auch unabhängig von der Ausgestaltung der Fixiervorrichtung Schutz beansprucht.

Alle hier beschriebenen Aspekte, Ausführungsformen und Merkmale der Erfindung können, insbesondere auch losgelöst von der konkreten Ausgestaltung, in deren Zusammenhang sie erwähnt werden, jeweils miteinander kombiniert werden. Insbesondere können alle Gegenstände der abhängigen Ansprüche untereinander und mit dem Gegenstand des unabhängigen Anspruchs kombiniert werden.

Die Erfindung wird im Folgenden beispielhaft unter Bezugnahme auf die Zeichnungen beschrieben. Es zeigen:
- Fig. 1: eine Vorderansicht einer Ausführungsform eines erfindungsgemäßen Befestigungssystems,
- Fig. 2: eine Seitenansicht einer weiteren Ausführungsform eines erfindungsgemäßen Befestigungssystems,
- Fig. 3: eine Draufsicht einer Ausführungsform einer Fixiervorrichtung eines erfindungsgemäßen Befestigungssystems,
- Fig. 4: eine Seitenansicht der Fixiervorrichtung gemäß Fig. 3,
- Fig. 5: eine Schnittansicht einer weiteren Ausführungsform einer Wand zur Befestigung eines erfindungsgemäßen Befestigungssystems,
- Fig. 6: eine Schnittansicht einer Ausführungsform eines erfindungsgemäßen Befestigungssystems, und
- Fig. 7: eine Schnittansicht einer Ausführungsform einer erfindungsgemäßen Fixiervorrichtung, und
- Fig. 8 bis Fig. 28: Perspektivansichten verschiedener Ausführungsformen einer erfindungsgemäßen Fixiervorrichtung.

Zunächst ist zu bemerken, dass die dargestellten Ausführungsformen rein beispielhafter Natur sind. So können einzelnen Merkmale nicht nur in der gezeigten Kombination sondern auch in Alleinstellung oder in anderen technisch sinnvollen Kombinationen realisiert sein. Insbesondere kann die Kulissenführung bzw. der Kulissenstein eine andere Form aufweisen. Auch sind die Positionen und die Anzahl der Einführ-/Entnahmeabschnitte sowie der Fixiervorrichtungen rein beispielhaft. Ferner können andere Gegenstände an der Halterung fixiert werden. Die Merkmale einer Ausführungsform können auch beliebig mit Merkmalen einer anderen Ausführungsform kombiniert werden.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

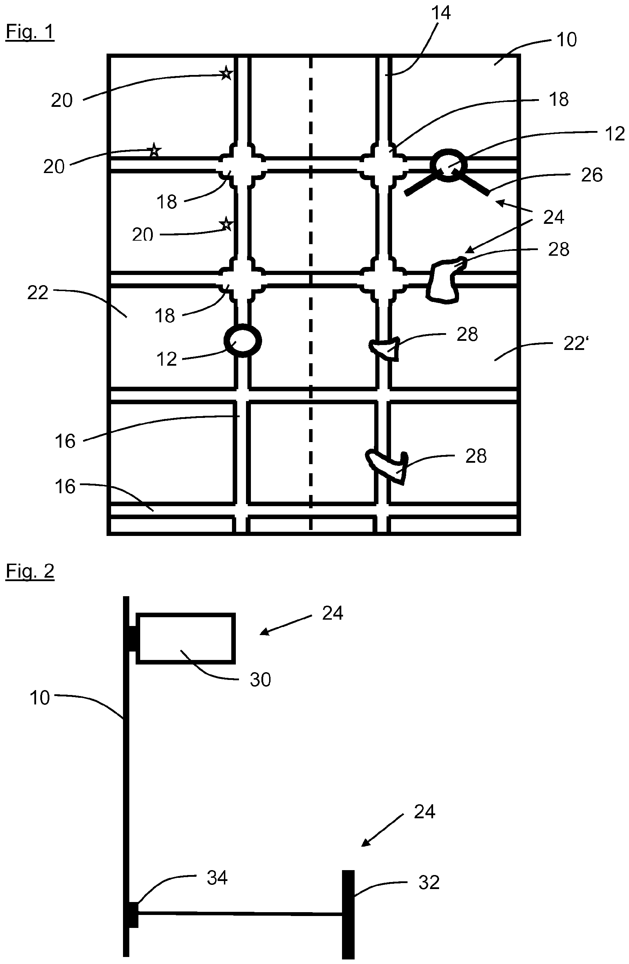

Fig. 1 zeigt ein Befestigungssystem mit einer flächigen Halterung 10 und mehreren Fixiervorrichtungen 12.

Die Fixiervorrichtungen 12 sind über eine Kulissenführung 14 mit der Halterung 10 verbunden. Die Halterung 10 umfasst hierbei vertikal und horizontal orientierte Nuten 16. An einigen Kreuzungspunkten der Nuten 16 sind Einführ-/Entnahmeabschnitte 18 vorgesehen, an denen die Fixiervorrichtungen 12 eingesetzt bzw. abgenommen werden können, da an diesen Abschnitten die Öffnungen der Nuten 16 breiter sind als die Kulissensteine der Fixiervorrichtung 12.

Die Halterung 10 kann Markierungen 20 aufweisen. Die Markierungen 20 können anzeigen, an welcher Position die Fixiervorrichtungen 12 befestigt werden sollen.

Die Halterung 10 kann mehrere Haltemodule 22, 22' umfassen. In Fig. 1 sind zwei Haltemodule 22, 22' dargestellt. Die Verbindung wird durch die gestrichelte Linie symbolisiert. Je nach Anwendung können beliebig viele und beliebig ausgestaltete Haltemodule 22, 22' nebeneinander, insbesondere seitlich oder übereinander, angeordnet werden. Vorzugsweise können die Haltemodule 22, 22' identisch aufgebaut sein.

Die Fixiervorrichtung 12 kann an einem der Einführ-/Entnahmeabschnitte mit einer vertikalen oder horizontalen Nut 16 der Halterung 10 in Eingriff gebracht werden. Anschließend kann die Fixiervorrichtung 12 in die gewünschte Position verstellt werden. Dabei kann die Fixiervorrichtung 12 verschoben und an der gewünschten Position lösbar befestigt werden. Die gewünschte Position kann beispielsweise durch eine Markierung 20 angezeigt werden.

Anschließend kann an eine Haltevorrichtung der Fixiervorrichtung 12 ein Gegenstand 24 befestigt werden. Alternativ kann die Fixiervorrichtung 12 auch bereits zusammen mit dem Gegenstand 24 mit der Halterung 10 in Eingriff gebracht werden.

Bei dem Gegenstand 24 kann es sich beispielsweise um ein Sportgerät, z.B. eine Klimmzugstange 26 oder einen Klettergriff 28, handeln. Klettergriffe 28 werden normalerweise an rasterförmig angeordneten Einschlagmuttern befestigt, sodass z.B. die Abstände zwischen den Klettergriffen 28 nicht stufenlos verstellt werden können. Auch gestaltet sich eine Umpositionierung vergleichsweise aufwändig.

Beim erfindungsgemäßen Befestigungssystem können die Gegenstände 24 jedoch stufenlos verstellt und befestigt werden. Eine Befestigung der Fixiervorrichtung an der Halterung kann insbesondere werkzeuglos erfolgen. Ein Wechsel und/oder eine Umpositionierung des Gegenstands 24 gestaltet sich auf diese Weise besonders einfach. So kann beispielsweise die Höhe der Klimmzugstange 26 an die Größe eines Benutzers angepasst werden. Auch können z.B. Kletterrouten schnell umgeschraubt werden.

Wie in der Seitenansicht gemäß Fig. 2 zu sehen ist, kann als Sportgerät auch beispielsweise eine Rolle 30 an der Halterung 10 befestigt werden. Auch kann z.B. eine Langhantel 32 über eine gelenkige Haltevorrichtung 34 mit einer an der Halterung 10 befestigten Fixiervorrichtung 12 verbunden sein.

Ferner können beliebige andere Gegenstände 24 je nach Bedarf an der gewünschten Position befestigt werden.

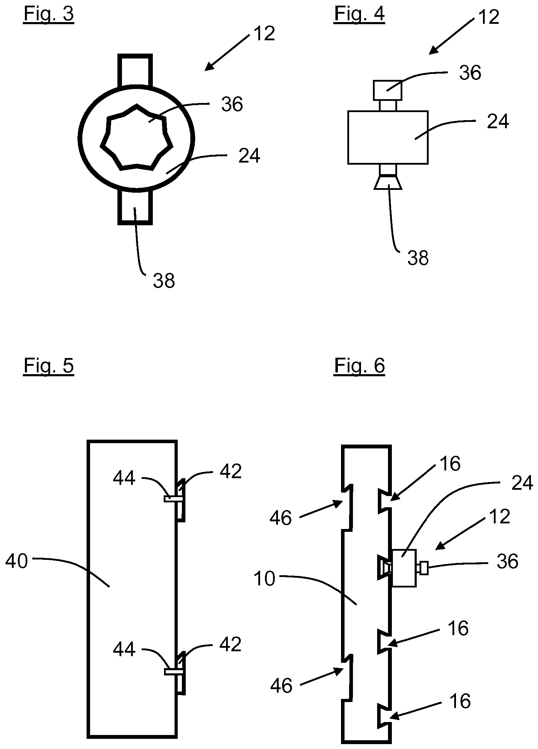

In Fig. 3 und Fig. 4 ist eine Fixiervorrichtung 12 beispielhaft dargestellt, welche eine Schraubvorrichtung 36 mit einer Sterngriffschraube umfasst. Die Schraubvorrichtung 36 wird durch einen Gegenstand 24 hindurch geführt und greif in einen länglichen Kulissenstein 38 ein. Der Kulissenstein 38 kann einen schwalbenschwanzförmigen Querschnitt aufweisen.

Durch Drehen der Sterngriffschraube 36 verkleinert sich der Abstand zwischen dem Schraubenkopf und dem Kulissenstein 38. Insbesondere wird dabei eine Gewindestange in ein Gewinde des Kulissensteins 38 gedreht.

Fig. 5 zeigt eine Wand 40, an der zwei Leisten 42 über Dübel 44 befestigt sind. Bei der Wand 40 kann es sich um eine herkömmliche Wand, z.B. in einem Fitnessstudio, handeln.

An dieser Wand 40 kann eine in Fig. 6 dargestellte Halterung 10 eingehängt werden. Dazu weist die Halterung 10 als Hinterschneidungen 46 ausgebildete Befestigungsmittel auf.

Auf der der Wand 10 abgewandten Seite weist die Halterung 10 Nuten 16 für eine Fixiervorrichtung 12 auf. Die Nuten 16 sind in die plattenförmige Halterung 10 eingearbeitet, d.h. diese stehen nicht, wie z.B. außen aufgeschraubte Metallleisten, vor. Das Verletzungsrisiko wird durch diesen bündigen Abschluss minimiert.

Der Kulissenstein 38 der Fixiervorrichtung 12 kann am Einführ-/Entnahmeabschnitt mit einer Nut 16 in Eingriff gebracht werden. Anschließend kann diese an die gewünschte Position verschoben und dort fixiert werden.

Durch Drehen der Schaubvorrichtung 36 zieht sich die Fixiervorrichtung 12 fest und befestigt so den Gegenstand 24 an der Halterung 10.

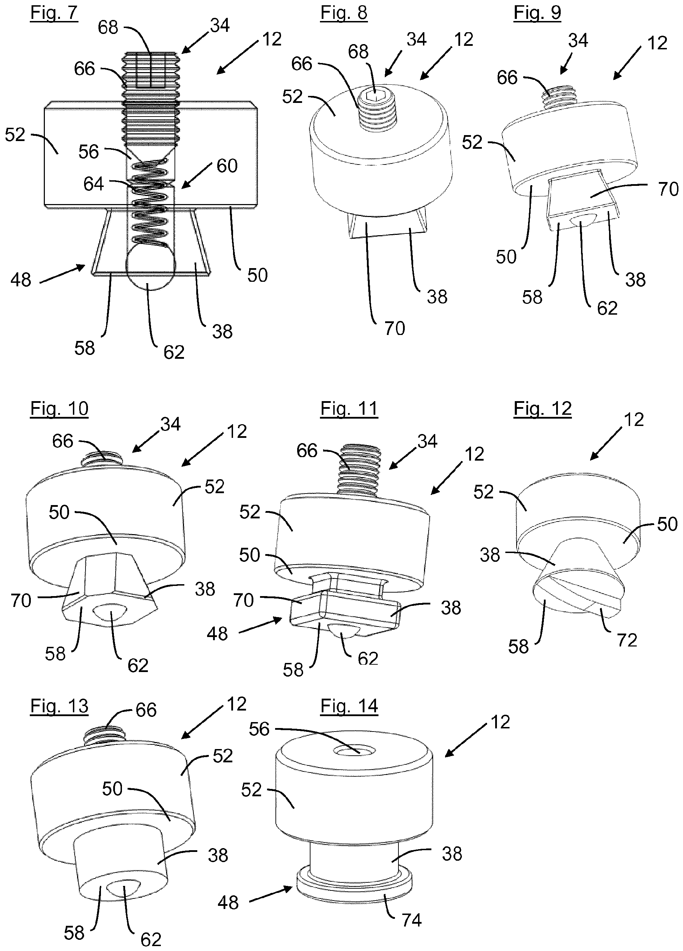

Fig. 7 zeigt eine Schnittansicht einer Fixiervorrichtung 12 mit einem Kulissenstein 38, welcher zumindest eine Auskragung 48 aufweist. Eine derartige Fixiervorrichtung 12 kann z.B. bei einem in Fig. 1, 2, 5 oder 6 gezeigten Befestigungssystem verwendet werden.

Der Kulissenstein 38 erstreckt sich aus einer Anschlagsfläche 50 eines Anschlagkörpers 52. Der Anschlagskörper 52 weist eine zentrale Aussparung 56 auf. Die Aussparung 56 kann ein Innengewinde aufweisen.

Die Aussparung 56 erstreckt sich auch bis zu einer Stirnseite 58 des Kulissensteins 38. Insbesondere kann sich die Aussparung 56 nach vorne hin verjüngen.

In der Aussparung 56 ist eine Vorsprungsvorrichtung 60 mit einem z.B. als Kugel 62 ausgebildeten Vorsprungselement sowie einer z.B. als Feder 64 ausgebildeten Vorspannvorrichtung angeordnet.

Ein Haltestift 66 kann die Vorsprungsvorrichtung 60 in der Aussparung 56 sichern und die Feder 64 vorspannen. Die Kugel 62 kann aufgrund der Verjüngung der Aussparung 56 im Bereich der Stirnseite 58 nicht vollständig heraustreten.

Der Haltestift 66 kann ein Außengewinde aufweisen. Auf diese Weise kann der Haltestift 66 in das Innengewinde der Aussparung 56 eingedreht werden. Dies kann über eine Werkzeugaufnahme 68 auch mittels eines Werkzeugs erfolgen.

Der Haltestift 66 kann einen Teil einer Haltevorrichtung 34 bilden. Gegenstände 24 können am Haltestift 66 befestigt werden.

Wie in Fig. 8 und 9 zu sehen ist, erstrecken sich vier Seitenflächen 70 unter einem Winkel trichterförmig von der Anschlagsfläche 50 und bilden dadurch den Kulissenstein 38, welcher mit einer Nut 16 in Eingriff gebracht werden kann.

Die Kugel 62 kann zwischen einer Fixierposition und einer Verschiebeposition verstellt werden. In der Fixierposition ragt ein Abschnitt der Kugel 62 weiter über die Stirnseite 58 des Kulissensteins 38 hervor als in der Verschiebeposition.

In der Fixierposition ist die Fixiervorrichtung 12 insbesondere an einer Nut 16 fixiert und kann sich nicht bewegen. Zum Verschieben wird eine Kraft entgegen der Federkraft aufgewendet. So wird die Kugel 62 nach innen gedrückt. Die Selbsthemmung der Fixiervorrichtung 12 löst sich, sodass die Fixiervorrichtung 12 verschoben werden kann.

Fig. 10 zeigt einen Kulissenstein 38 mit acht Seitenflächen 70. Dadurch ist eine Verschiebung in x- und y-Richtung sowie zusätzlich in einer Diagonalen möglich.

In Fig. 11 ist der Kulissenstein 38 T-förmig mit vier Seitenflächen 70 ausgebildet.

Fig. 12 zeigt eine Fixiervorrichtung 12 mit einem kegelförmigen Kulissenstein 38. Optional kann an der Stirnseite 58 alternativ oder zusätzlich zu einem Vorsprungselement 62 eine Struktur 72 vorgesehen sein.

Die Struktur 72 könnte auch anders geformt sein und beispielsweise eine Hinterschneidung aufweisen.

Die Struktur 72 kann insbesondere mit einer entsprechend geformten Nut 16 zusammenwirken. Beispielsweise durch ein Verdrehen, vorzugsweise um 90°, kann die Fixiervorrichtung 12 an der Nut 16 fixiert werden.

Die Struktur 72 kann alternativ oder zusätzlich an der Nut 16 vorgesehen sein. Ein entsprechend geformter Kulissenstein 38 kann hierbei durch ein Verdrehen, vorzugsweise um 90°, fixiert werden.

Wie in Fig. 13 dargestellt ist, kann der Kulissenstein 38 zylinderförmig ausgebildet sein.

Ein zylinderförmiger Kulissenstein 38 kann, wie in Fig. 14 gezeigt ist, einen ringförmigen Vorsprung 74 aufweisen, welcher eine Auskragung 48 bildet.

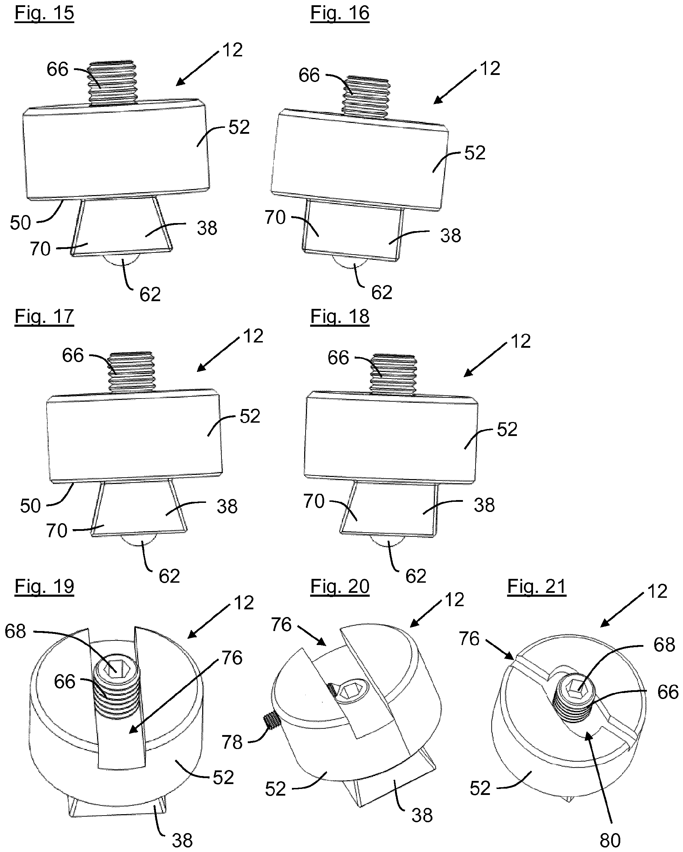

In den Fig. 15 und 16 ist eine Ausführungsform dargestellt, bei der sich zwei Seitenflächen 70 unter einem Winkel von 75° und zwei Seitenflächen 70 unter einem Winkel von 90° zur Anschlagsfläche 50 erstrecken.

In den Fig. 17 und 18 ist eine Ausführungsform dargestellt, bei der sich drei Seitenflächen 70 unter einem Winkel von 75° und eine Seitenfläche 70 unter einem Winkel von 90° zur Anschlagsfläche 50 erstrecken.

Fig. 19 zeigt eine Fixiervorrichtung 12 mit einem Halteschlitz 76 an der der Anschlagsfläche 50 abgewandten Stirnseite. Der Halteschlitz 76 erstreckt sich quer über die gesamte Stirnseite. In den Halteschlitz 76 kann z.B. ein Gegenstand 24 eingesteckt werden.

Wie in Fig. 20 dargestellt ist, weist die Haltevorrichtung 34 ein als Schraube 78 ausgebildetes Sicherungselement auf. Ein in z.B. den Halteschlitz 76 eingebrachter Gegenstand 24 kann somit fixiert werden.

Der Halteschlitz 76 kann - wie in Fig. 21 gezeigt ist - auch eine Hinterschneidung 80 aufweisen. Ähnlich einem Bajonett-Verschluss kann ein Gegenstand 24 aufgesetzt und, z.B. um 90°, verdreht werden. Auf diese Weise wird der Gegenstand 24 gesichert.

Die Hinterschneidung 80 könnte auch z.B. eine Struktur 72 eines in Fig. 12 dargestellten Kulissensteins 38 bilden. So könnte eine Fixierung an einer Nut 16 durch ein Verdrehen erfolgen.

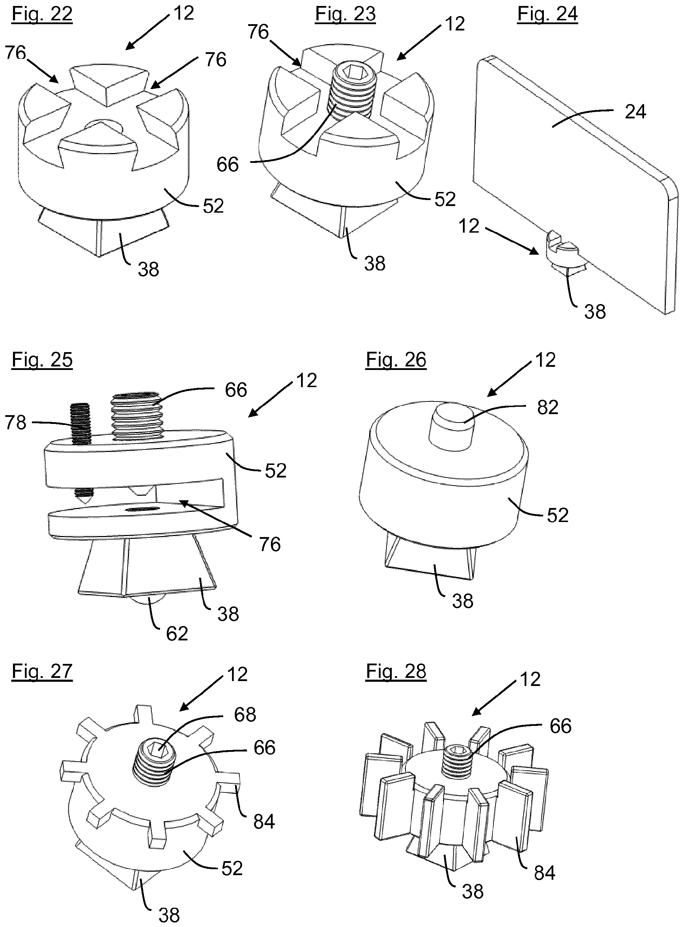

Wie in Fig. 22 dargestellt ist, können auch zwei sich kreuzende Halteschlitze 76 vorgesehen sein. Die Halteschlitze 76 können z.B. schwalbenschwanzförmig ausgebildet sein.

Wie in Fig. 23 gezeigt ist, können die Wände der Halteschlitze 76 auch gerade sein.

In die Halteschlitze 76 kann, wie in Fig. 24 dargestellt ist, ein Gegenstand 24 eingesteckt oder eingeschoben werden.

Gemäß der Ausführungsform, welche in Fig. 25 gezeigt ist, kann sich der Halteschlitz 76 auch zwischen der oberen Stirnseite und der Anschlagsfläche 50 erstrecken, z.B. als seitlicher Schlitz. Der Halteschlitz 76 ist dabei innerhalb des Anschlagskörpers 52 angeordnet.

In den Halteschlitz 76 kann ein Gegenstand 24 eingesteckt werden. Beispielsweise kann es sich dabei um eine Platte, z.B. Bodenplatte, handeln. Die Platte kann z.B. ein Kunststoff-, Metall- und/oder Glasmaterial, beispielsweise Blech oder Plexiglas, umfassen oder daraus bestehen.

Die Platte kann L-, U- oder S-förmig geformt sein. Der lange Schenkel kann z.B. als Auflagefläche dienen. Ein kurzer, seitlicher Schenkel kann in den Halteschlitz 76 eingeführt und darin befestigt werden. Je nach Orientierung der Fixiervorrichtung bzw. Form der Platte kann die Auflagefläche auch eine Umrandung aufweisen. Beispielsweise kann die Platte von oben oder unten her in der Fixiervorrichtung gesichert sein.

Optional kann eine Sicherung bzw. Arretierung mittels einer Schraube 78 erfolgen.

Wie in Fig. 26 zu sehen ist, kann anstelle eines ein Außengewinde aufweisenden Haltestifts 66 auch ein normaler Stift 82 vorgesehen sein, welcher in die Aussparung 56 des Anschlagskörpers 52 gesteckt wird. Am Stift 82 kann z.B. ein Schnapper vorgesehen sein, um beispielsweise einen Gegenstand 24 daran befestigen zu können.

In Fig. 27 ist gezeigt, dass der Anschlagskörper 52 auch seitliche Vorsprünge 84 aufweisen kann. Die Vorsprünge 84 können sich insbesondere sternförmig erstrecken. Vorzugsweise sind die Abstände zwischen den Vorsprüngen 84 gleich.

Wie in Fig. 28 zu sehen ist, können sich die Vorsprünge 84 auch über die Anschlagsfläche 50 und/oder die der Anschlagsfläche 50 abgewandte Stirnseite erstrecken. Die Selbsthemmung kann dadurch verbessert werden, da der Kontakt zu einem Rand der Nut 16 schneller hergestellt wird.

### Bezugszeichenliste

- 10: Halterung
- 12: Fixiervorrichtung
- 14: Kulissenführung
- 16: Nut
- 18: Einführ-/Entnahmeabschnitt
- 20: Markierung
- 22, 22': Haltemodul
- 24: Gegenstand
- 26: Klimmzugstange
- 28: Klettergriff
- 30: Rolle
- 32: Langhantel
- 34: Haltevorrichtung
- 36: Schraubvorrichtung, Sterngriffschraube
- 38: Kulissenstein
- 40: Wand
- 42: Leiste
- 44: Dübel
- 46: Hinterschneidung, Befestigungsmittel
- 48: Auskragung
- 50: Anschlagsfläche
- 52: Anschlagskörper
- 56: Aussparung
- 58: Stirnseite
- 60: Vorsprungsvorrichtung
- 62: Kugel, Vorsprungselement
- 64: Feder, Vorspannvorrichtung
- 66: Haltestift
- 68: Werkzeugaufnahme
- 70: Seitenfläche
- 72: Struktur
- 74: Vorsprung
- 76: Halteschlitz
- 78: Schraube, Sicherungselement
- 80: Hinterschneidung
- 82: Stift
- 84: seitlicher Vorsprung

## Patentansprüche

1. System zum Befestigen von Gegenständen (24), umfassend eine Halterung (10) und
zumindest eine Fixiervorrichtung (12),
wobei die Fixiervorrichtung (12) über eine Kulissenführung (14) mit der Halterung (10) verbunden oder verbindbar ist und zur stufenlosen, lösbaren Befestigung an der Halterung (10) ausgebildet ist, wobei
die Kulissenführung (14) derart ausgebildet ist, dass die Fixiervorrichtung (12) relativ zur Halterung (10) in zumindest einer vertikalen Richtung und wenigstens einer horizontalen Richtung einer Ebene verstellbar ist, wobei
die Kulissenführung (14) mehrere vertikale und horizontale Nuten (16) aufweist, die rasterförmig angeordnet sind und Kreuzungspunkte aufweisen,
**dadurch gekennzeichnet,**
**dass** die Halterung (10) plattenförmig ausgebildet ist und die Nuten (16) aus einem anderen Material in die Halterung (10) eingebracht sind.

2. System nach Anspruch 1,
**dadurch gekennzeichnet,**
**dass** Metallschienen in die Nuten (16) eingebracht sind.

3. System nach Anspruch 1 oder 2,
**dadurch gekennzeichnet,**
**dass** die Kulissenführung (14) derart ausgebildet ist, dass die Fixiervorrichtung (12) zumindest in einer anderen Richtung in der Ebene verstellbar ist.

4. System nach einem der vorhergehenden Ansprüche,
**dadurch gekennzeichnet,**
**dass** die Kulissenführung (14) derart ausgebildet ist, dass die Fixiervorrichtung (12) zumindest in einer gekrümmten Bahn verstellbar ist.

5. System nach einem der vorhergehenden Ansprüche,
**dadurch gekennzeichnet,**
**dass** die Kulissenführung (14) zumindest einen Einführ-/Entnahmeabschnitt (18) aufweist, in dem die Fixiervorrichtung (12) einführbar und/oder entnehmbar ist.

6. System nach einem der vorhergehenden Ansprüche,
**dadurch gekennzeichnet,**
**dass** Einführ-/Entnahmeabschnitte (18) an Kreuzungspunkten der Nuten (16) vorgesehen sind, insbesondere wobei jeder Kreuzungspunkt einen Einführ-/Entnahmeabschnitt (18) aufweist.

7. System nach einem der vorhergehenden Ansprüche ,
**dadurch gekennzeichnet,**
**dass** die Nuten (16) T-förmig oder schwalbenschwanzförmig ausgebildet sind.

8. System nach einem der vorhergehenden Ansprüche,
**dadurch gekennzeichnet,**
**dass** die Halterung (10) modulartig ausgebildet ist und mehrere, nebeneinander anordbare Platten umfasst.

9. System nach einem der vorhergehenden Ansprüche,
**dadurch gekennzeichnet,**
**dass** die Halterung (10) Befestigungsmittel (46) zur Befestigung an einer Wand (40), einer Decke und/oder einem Boden umfasst.

10. System nach einem der vorhergehenden Ansprüche,
**dadurch gekennzeichnet,**
**dass** die Fixiervorrichtung (12) einen länglichen oder runden Kulissenstein (38) umfasst, insbesondere wobei der Kulissenstein (38) T-förmig oder schwalbenschwanzförmig ausgebildet ist.

11. System nach einem der vorhergehenden Ansprüche,
**dadurch gekennzeichnet,**
**dass** die Fixiervorrichtung (12) eine Schraub-, Rast- und/oder Klemmvorrichtung (36) zur Fixierung an der Halterung (10) umfasst.

12. System nach einem der vorhergehenden Ansprüche,
**dadurch gekennzeichnet,**
**dass** die Fixiervorrichtung (12)
einen Kulissenstein (38), welcher zumindest eine Auskragung (48) aufweist, und
eine Vorsprungsvorrichtung (60) umfasst, wobei
die Vorsprungsvorrichtung (60) ein Vorsprungselement (62) aufweist, welches zwischen einer Fixierposition und einer Verschiebeposition verstellbar ist, wobei zumindest ein Abschnitt des Vorsprungselements (62) in der Fixierposition weiter über die Stirnseite (58) des Kulissensteins (38) hervorragt als in der Verschiebeposition, insbesondere wobei
die Vorsprungsvorrichtung (60) eine Vorspannvorrichtung (64) aufweist, welche das Vorsprungselement (62) in die Fixierposition vorspannt.

13. System nach einem der vorhergehenden Ansprüche,
**dadurch gekennzeichnet,**
**dass** die Fixiervorrichtung (12) eine Haltevorrichtung (34) für einen Gegenstand (24), insbesondere ein Sportgerät (26, 28, 30, 32) und/oder Medizingerät, umfasst, und/oder dass eine Markierung (20) zur Anzeige eines Fixierpunktes für die Fixiervorrichtung (12) vorgesehen ist.

## Claims

1. System for fastening objects (24), comprising
a holder (10), and
at least one fastening device (12),
wherein the fastening device (12) is connected or can be connected to the holder (10) by means of a slotted guide (14) and is configured for continuously variable, detachable fastening to the holder (10), wherein the slotted guide (14) is configured in such a way that the fastening device (12) can be adjusted relative to the holder (10) in at least one vertical direction and at least one horizontal direction of a plane, wherein
the slotted guide (14) comprises several vertical and horizontal grooves (16) that are disposed in a grid and have points of intersection, **characterised in that**
the holder (10) is panel-shaped and the grooves (16) made from a different material are incorporated into the holder (10).

2. System in accordance with claim 1,
**characterised in that**
metal rails are incorporated into the grooves (16).

3. System in accordance with claim 1 or 2,
**characterised in that** the slotted guide (14) is configured in such a way that the fastening device (12) can be adjusted in at least a different direction in the plane.

4. System in accordance with any of the preceding claims,
**characterised in that**
the slotted guide (14) is configured in such a way that the fastening device (12) can be adjusted in at least one curved trajectory.

5. System in accordance with any of the preceding claims,
**characterised in that**
the slotted guide (14) has at least one insertion/removal section (18) into and/or from which the fastening device (12) can be inserted and/or removed.

6. System in accordance with any of the preceding claims, **characterised in that**
insertion/removal sections (18) are provided at points of intersection of the grooves (16), especially wherein each point of intersection has an insertion/removal section (18).

7. System in accordance with any of the preceding claims, **characterised in that**
the grooves (16) are T-shaped or dovetail-shaped.

8. System in accordance with any of the preceding claims, **characterised in that**
the holder (10) is modular and comprises several panels that can be disposed next to each other.

9. System in accordance with any of the preceding claims, **characterised in that**
the holder (10) comprises fastening means (46) for the purpose of fastening to a wall (40), ceiling and/or floor.

10. System in accordance with any of the preceding claims, **characterised in that**
the fastening device (12) comprises an elongated or round sliding block (38), especially wherein the sliding block (38) is T-shaped or dovetail-shaped.

11. System in accordance with any of the preceding claims, **characterised in that**
the fastening device (12) comprises a screwing, locking and/or clamping device (36) for the purpose of fastening to the holder (10).

12. System in accordance with any of the preceding claims,
**characterised in that**
the fastening device (12) comprises
a sliding block (38), which has at least one overhang (48), and
a projection device (60), wherein
the projection device (60) has a projection member (62), which is adjustable between a fastening position and a displacement position, wherein at least a portion of the projection member (62) in the fastening position projects further over the end-face (58) of the sliding block (38) than in the displacement position, especially wherein
the projection device (60) has a pre-tensioning device (64), which pre-tensions the projection member (62) into the fastening position.

13. System in accordance with any of the previous claims,
**characterised in that**
the fastening device (12) comprises a holding device (34) for an object (24), in particular an item of sports equipment (26, 28, 30, 32) and/or a medical device and/or a marking (20) is provided to indicate a fastening point for the fastening device (12).

## Revendications

1. Système de fixation d'objets (24), comprenant
un support (10) et
au moins un dispositif de fixation (12),
dans lequel
le dispositif de fixation (12) est relié ou peut être relié au support (10) par l'intermédiaire d'un guidage à coulisse (14) et est réalisé pour la fixation continue et amovible au support (10),
le guidage à coulisse (14) est réalisé de telle sorte que le dispositif de fixation (12) puisse être déplacé par rapport au support (10) dans au moins une direction verticale et dans au moins une direction horizontale d'un plan, le guidage à coulisse (14) comprend plusieurs rainures verticales et horizontales (16) qui sont disposées à la manière d'une grille et qui présentent des points de croisement,
**caractérisé en ce que**
le support (10) est réalisé en forme de plaque, et les rainures (16) constituées d'un autre matériau sont ménagées dans le support (10).

2. Système selon la revendication 1,
**caractérisé en ce que**
des rails métalliques sont insérés dans les rainures (16).

3. Système selon la revendication 1 ou 2,
**caractérisé en ce que**
le guidage à coulisse (14) est réalisé de telle sorte que le dispositif de fixation (12) puisse être déplacé dans au moins une autre direction dans ledit plan.

4. Système selon l'une des revendications précédentes,
**caractérisé en ce que**
le guidage à coulisse (14) est réalisé de telle sorte que le dispositif de fixation (12) puisse être déplacé selon au moins une trajectoire courbe.

5. Système selon l'une des revendications précédentes,
**caractérisé en ce que**
le guidage à coulisse (14) présente au moins une portion d'insertion/retrait (18) dans laquelle le dispositif de fixation (12) peut être inséré et/ou retiré.

6. Système selon l'une des revendications précédentes,
**caractérisé en ce que**
des portions d'insertion/retrait (18) sont prévues aux points de croisement des rainures (16), en particulier chaque point de croisement comprenant une portion d'insertion/retrait (18).

7. Système selon l'une des revendications précédentes,
**caractérisé en ce que**
les rainures (16) sont en forme de T ou en forme de queue d'aronde.

8. Système selon l'une des revendications précédentes,
**caractérisé en ce que**
le support (10) est de conception modulaire et comprend plusieurs plaques qui peuvent être disposées les unes à côté des autres.

9. Système selon l'une des revendications précédentes,
**caractérisé en ce que**
le support (10) comprend des moyens de fixation (46) pour la fixation à un mur (40), à un plafond et/ou à un plancher.

10. Système selon l'une des revendications précédentes,
**caractérisé en ce que**
le dispositif de fixation (12) comprend un coulisseau (38) allongé ou rond, en particulier le coulisseau (38) étant réalisé en forme de T ou en forme de queue d'aronde.

11. Système selon l'une des revendications précédentes,
**caractérisé en ce que**
le dispositif de fixation (12) comprend un dispositif de vissage, d'enclenchement et/ou de serrage (36) pour la fixation au support (10).

12. Système selon l'une des revendications précédentes,
**caractérisé en ce que**
le dispositif de fixation (12) comprend
un coulisseau (38) ayant au moins un élargissement (48), et
un dispositif en saillie (60),
le dispositif en saillie (60) présentant un élément saillant (62) qui peut être déplacé entre une position de fixation et une position de translation, au moins une portion de l'élément saillant (62) dépassant davantage de la face frontale (58) du coulisseau (38) dans la position de fixation que dans la position de translation, en particulier
le dispositif en saillie (60) comprenant un dispositif de précontrainte (64) qui met sous précontrainte l'élément saillant (62) vers la position de fixation.

13. Système selon l'une des revendications précédentes,
**caractérisé en ce que**
le dispositif de fixation (12) comprend un dispositif de maintien (34) pour un objet (24), en particulier pour un équipement de sport (26, 28, 30, 32) et/ou un équipement médical, et/ou
**en ce qu'**il est prévu un marquage (20) pour indiquer un point de fixation pour le dispositif de fixation (12).
